# EUROPEAN PATENT APPLICATION

(11) **EP 4 564 166 A1**
(43) Date of publication of application: **04.06.2025**
(21) Application number: 23849101.3
(22) Date of filing: 28.06.2023
(51) Int. Cl.: G06F 9/48

(54) **TASK MANAGEMENT METHOD AND RELATED DEVICE**

(30) Priority: 30.07.2022 CN 202210912632
(71) Applicant: Huawei Technologies Co., Ltd., Shenzhen, Guangdong 518129 (CN)
(72) Inventor: ZOU, Yue, Shenzhen, Guangdong 518129 (CN); TAN, Yihua, Shenzhen, Guangdong 518129 (CN); PANG, Desong, Shenzhen, Guangdong 518129 (CN)
(74) Representative: Gill Jennings & Every LLP
(86) International application number: PCT/CN2023/103440
(87) International publication number: WO 2024/027391

(57) **Abstract**

Embodiments of this application provide a task management method and a related device, and relate to the field of intelligent terminal technologies. The method includes: monitoring whether a key scenario that affects user experience is triggered; if it is monitored that the key scenario is triggered, monitoring, in user mode, a high-load task generated by an application; determining, in the user mode, a status of the high-load task, and transferring information associated with the high-load task to kernel mode; monitoring, in the kernel mode, a system global status of an electronic device, determining an execution policy of the high-load task based on the information associated with the high-load task and/or the system global status, and returning the execution policy to the user mode; and determining, in the user mode, an execution decision of the high-load task based on the status of the high-load task and/or the execution policy. In embodiments of this application, when the key scenario that affects user experience is triggered, the high-load task is managed and controlled based on the task status monitored in the user mode and the system global status monitored in the kernel mode, to ensure prior occupation of a system resource by the key scenario.

## Description

This application claims priority to Chinese Patent Application No. 202210912632.X, filed with the China National Intellectual Property Administration on July 30, 2022 and entitled "TASK MANAGEMENT METHOD AND RELATED DEVICE", which is incorporated herein by reference in its entirety.

### TECHNICAL FIELD

This application relates to the field of intelligent terminal technologies, and in particular, to a task management method and a related device.

### BACKGROUND

In a process in which an application runs on an electronic device (for example, a mobile terminal, a personal computer, an Internet of things device, or a server), a large quantity of tasks are generated. Some high-load tasks are executed for long time. Consequently, system load is increased. For example, usage of resources such as a processor and a memory increases. As a result, there are no enough system resources to process some key scenarios or tasks. Consequently, system lags occur, and user experience is affected.

### SUMMARY

In view of this, it is necessary to provide a task management method to resolve a problem that system resources for key scenarios are insufficient because a high-load task occupies excessive system resources.

According to a first aspect, an embodiment of this application provides a task management method, including: monitoring whether a key scenario of an electronic device is triggered; if it is monitored that the key scenario is triggered, monitoring, in user mode, a high-load task generated by an application; determining, in the user mode, a status of the high-load task, and transferring information associated with the high-load task to kernel mode; monitoring, in the kernel mode, a system global status of the electronic device, determining an execution policy of the high-load task based on the information associated with the high-load task and/or the system global status, and returning the execution policy to the user mode; and determining, in the user mode, an execution decision of the high-load task based on the status of the high-load task and/or the execution policy.

According to this technical solution, when the key scenario that affects user experience is triggered, the high-load task is managed and controlled based on the task status monitored in the user mode and the system global status monitored in the kernel mode, to ensure prior occupation of a system resource by the key scenario. User experience is improved.

In a possible implementation, the key scenario includes application startup, user identity identification, display interface drawing, and screen-on and screen-off of a display.

According to the technical solution, a critical application scenario that affects user experience is determined as the key scenario, so that the high-load task is managed and controlled, to effectively improve user experience.

In a possible implementation, the monitoring whether a key scenario is triggered includes: inserting a stub into a system service and/or a system application, where the stub is a code segment for collecting information; monitoring, by executing the stub, whether the key scenario is triggered, and collecting, via the stub, information associated with the key scenario; and writing, by the system service or the system application, the information associated with the key scenario onto a first driver node, where the first driver node sends the information associated with the key scenario to a monitoring module.

According to the technical solution, the stub is inserted into the system service or the application, to monitor the key scenario and collect the information about the key scenario, so that triggering of the key scenario is monitored in a timely manner, and the high-load task is managed and controlled in a timely manner.

In a possible implementation, the monitoring, in the user mode by executing the stub, whether the key scenario is triggered includes: detecting, by executing the stub, whether a value of a key scenario flag corresponding to a task generated by the application is a preset value; and if the value of the key scenario flag of the task is the preset value, determining that the key scenario is triggered; or if the value of the key scenario flag of the task is not the preset value, determining that the key scenario is not triggered.

According to the technical solution, the key scenario flag is set for a scenario, so that when the scenario is triggered, whether the triggered scenario is the key scenario may be determined based on the key scenario flag in a timely manner.

In a possible implementation, the system service or the system application writes the information associated with the key scenario onto the monitoring module in the kernel mode by communicating with the kernel mode.

According to the technical solution, overheads of communication between the user mode and the kernel mode can be reduced, system resources occupied by interaction between the user mode and the kernel mode can be reduced, and system smoothness can be ensured.

In a possible implementation, the determining, in the user mode, a status of the high-load task includes: performing classification on the high-load task in the user mode, to determine a type of the high-load task, and using the type of the high-load task as the status of the high-load task.

According to the technical solution, the status of the high-load task can be accurately determined based on the type of the high-load task.

In a possible implementation, types of the high-load task include a key urgent task, a key non-urgent task, a non-key urgent task, and a non-key non-urgent task.

According to the technical solution, types of high-load tasks are determined, so that different types of high-load tasks are managed and controlled by using corresponding policies, and the high-load tasks are managed and controlled to adapt to a system requirement.

In a possible implementation, the performing classification on the high-load task in the user mode, to determine a type of the high-load task includes: determining whether the high-load task is generated by a foreground process, and determining whether the high-load task has expired; and if the high-load task is generated by the foreground process and the high-load task has expired, determining that the high-load task is the key urgent task; if the high-load task is generated by the foreground process and the high-load task has not expired, determining that the high-load task is the key non-urgent task; if the high-load task is not generated by the foreground process and the high-load task has expired, determining that the high-load task is the non-key urgent task; or if the high-load task is not generated by the foreground process and the high-load task has not expired, determining that the high-load task is the non-key non-urgent task.

According to the technical solution, whether the task is generated by the foreground process is determined, to determine whether the task is critical. A task in the key scenario may be determined as a key task with a priority for execution. Whether the task has expired is determined, to determine whether the task is urgent. In this way, an expired task has a priority for execution.

In a possible implementation, the determining whether the high-load task has expired includes: determining whether current time exceeds expected processing time of the high-load task; and if the current time exceeds the expected processing time of the high-load task, determining that the high-load task has expired; or if the current time does not exceed the expected processing time of the high-load task, determining that the high-load task has not expired.

According to the technical solution, whether the current time exceeds the expected processing time of the task may be determined, to accurately determine whether the task has expired. In this way, the expired task may have a priority for execution.

In a possible implementation, both the execution policy and the execution decision include normal execution, delayed execution, and priority adjustment execution.

According to the technical solution, different execution strategies are determined for different types of tasks, to accurately manage and control the high-load task.

In a possible implementation, the determining, in the user mode, a status of the high-load task, and transferring information associated with the high-load task to kernel mode includes: if it is determined in the user mode that the high-load task is the key urgent task, determining that the execution decision of the high-load task is the normal execution; or if it is determined in the user mode that the high-load task is not the key urgent task, transferring the information associated with the high-load task to the kernel mode.

According to the technical solution, the key urgent task may have the priority for execution, to avoid a delay caused by a system decision. For another high-load task other than the key urgent task, the execution decision is determined based on analysis in the user mode and the kernel mode, to ensure that the task in the key scenario has a priority to occupy a system resource.

In a possible implementation, the system global status includes system load, duration of the key scenario, delay time of the high-load task, and a quantity of high-load tasks for the priority adjustment execution.

According to the technical solution, the system global status is analyzed in detail, to accurately determine the execution policy of the high-load task.

In a possible implementation, the information associated with the high-load task includes the status of the high-load task, and a package name, a version number, and a task name of the application that generates the high-load task.

According to the technical solution, in the kernel mode, the execution policy of the high-load task can be accurately determined based on the information associated with the high-load task.

In a possible implementation, the determining an execution policy of the high-load task based on the information associated with the high-load task and/or the system global status includes: determining, by a monitoring module, whether the system load is greater than or equal to a first threshold; and if the system load is greater than or equal to the first threshold, determining that execution policies of the key non-urgent task and the non-key urgent task are the delayed execution, and determining that the execution policy of the non-key non-urgent task is the priority adjustment execution; or if the system load is less than the first threshold, determining that execution policies of the key non-urgent task and the non-key urgent task are the normal execution, and determining that the execution policy of the non-key non-urgent task is the delayed execution.

According to the technical solution, the user mode and the kernel mode works in conjunction to manage and control the high-load task, to effectively improve efficiency of management and control for the high-load task.

In a possible implementation, the determining an execution policy of the high-load task based on the information associated with the high-load task and/or the system global status includes: determining, by a monitoring module, whether the system load is greater than or equal to a first threshold, and determining whether the duration of the key scenario is less than or equal to a second threshold; and if the system load is greater than or equal to the first threshold and the duration of the key scenario is less than or equal to the second threshold, determining that execution policies of the key non-urgent task and the non-key urgent task are the delayed execution, and determining that the execution policy of the non-key non-urgent task is the priority adjustment execution; or if the system load is less than the first threshold or whether the duration of the key scenario is greater than the second threshold, determining that execution policies of the key non-urgent task and the non-key urgent task are the normal execution, and determining that the execution policy of the non-key non-urgent task is the delayed execution.

According to the technical solution, the system global status is analyzed in detail, to accurately determine the execution policy of the high-load task.

In a possible implementation, the method further includes: monitoring timeout of the high-load task for the delayed execution, and monitoring the quantity of the high-load tasks for the priority adjustment execution.

According to the technical solution, the status of the high-load task can be monitored, and an execution occasion of the high-load task can be updated in a timely manner, to ensure normal execution of the high-load task.

In a possible implementation, the monitoring timeout of the task for the delayed execution includes: detecting in real time whether the delay time of the high-load task for the delayed execution is greater than or equal to a third threshold; and if the delay time of the high-load task for the delayed execution is greater than or equal to the third threshold, updating the execution policy of the task for the delayed execution to the normal execution.

According to the technical solution, when time before the delayed execution of the task is excessively long, the high-load task is forcibly executed, to ensure that the high-load task can also be executed in a timely manner.

In a possible implementation, the monitoring the quantity of the high-load tasks for the priority adjustment execution includes: detecting in real time whether the quantity of the high-load tasks in a queue of tasks to be executed is greater than or equal to a fourth threshold; and if the quantity of the high-load tasks in the queue of the tasks is greater than or equal to the fourth threshold, updating an execution policy of at least one high-load task in the queue of the tasks to the normal execution.

According to the technical solution, when there are excessive high-load tasks in a queue of tasks to be executed, the high-load task is forcibly executed, to ensure that the high-load task can also be executed in a timely manner.

In a possible implementation, the method further includes: determining, in the user mode, the execution decision of the high-load task based on the status of the high-load task, the execution policy, and a function of the high-load task.

According to the technical solution, the execution occasion of the task is determined based on the current system load and the function of the task, so that a more accurate decision recommendation can be provided when the application in the user mode initiates the high-load task.

In a possible implementation, the method further includes: sending, in the user mode, an execution status of the high-load task to the kernel mode, where the execution status includes request information, start information, and end information of execution of the high-load task.

According to the technical solution, task pressure on the entire system can be sensed more easily in the kernel mode.

In a possible implementation, the monitoring, in user mode, a high-load task generated by an application includes: when the application generates a task, determining whether the task is the high-load task.

According to the technical solution, whether the task generated by the application is the high-load task is determined, to determine whether the task needs to be managed and controlled, to ensure that the task is correctly managed and controlled.

In a possible implementation, the determining whether the task is the high-load task includes: obtaining, in the user mode, information associated with the task, and sending the information associated with the task to the monitoring module; querying, by the monitoring module, historical load information of the task, and returning, to the user mode, the historical load information that is of the task and that is obtained through query; determining, in the user mode, whether the historical load information of the task is greater than or equal to a load threshold; and if the historical load information of the task is greater than or equal to the load threshold, determining that the task is the high-load task; or if the historical load information of the task is less than the load threshold, determining that the task is not the high-load task.

According to the technical solution, whether the task is the high-load task can be accurately determined based on load information in a historical execution process, to accurately manage and control the high-load task.

According to a second aspect, an embodiment of this application provides a computer-readable storage medium, including computer instructions. When the computer instructions are run on an electronic device, the electronic device is enabled to perform the task management method according to the first aspect.

According to a third aspect, an embodiment of this application provides an electronic device. The electronic device includes a processor and a memory, the memory is configured to store instructions, and the processor is configured to invoke the instructions in the memory, to enable the electronic device to perform the task management method according to the first aspect.

According to a fourth aspect, an embodiment of this application provides a computer program product. When the computer program product is run on a computer, the computer is enabled to perform the task management method according to the first aspect.

According to a fifth aspect, an apparatus is provided. The apparatus has a function of implementing behavior of the electronic device in the method provided in the first aspect. The function may be implemented by hardware, or may be implemented by executing corresponding software by hardware. The hardware or the software includes one or more modules corresponding to the foregoing function.

It may be understood that the computer-readable storage medium according to the second aspect, the electronic device according to the third aspect, the computer program product according to the fourth aspect, and the apparatus according to the fifth aspect correspond to the method according to the first aspect. Therefore, for beneficial effects that can be achieved, refer to the beneficial effects of the corresponding method provided above. Details are not described herein again.

### BRIEF DESCRIPTION OF DRAWINGS

FIG. 1 is a diagram of a structure of an electronic device according to an embodiment of this application;
FIG. 2 is a diagram of a software structure of an electronic device according to an embodiment of this application;
FIG. 3A is a diagram of system load in a procedure in which an application process executes a task according to an embodiment of this application;
FIG. 3B is a diagram of an application scenario of a task management method according to an embodiment of this application;
FIG. 4A and FIG. 4B are a diagram of an architecture in which an electronic device implements task management according to an embodiment of this application;
FIG. 5 is a schematic flowchart of a task management method according to an embodiment of this application;
FIG. 6 is a schematic flowchart of monitoring whether a key scenario of a system is triggered according to an embodiment of this application;
FIG. 7 is a diagram of interaction between a system service and a monitoring module and interaction between a system application and the monitoring module according to an embodiment of this application;
FIG. 8 is a schematic flowchart of determining whether a task is a high-load task according to an embodiment of this application;
FIG. 9 is a schematic flowchart of determining an execution occasion of a task based on a type of the task according to an embodiment of this application;
FIG. 10 is a diagram of interaction between an application and a monitoring module according to an embodiment of this application;
FIG. 11 is a schematic flowchart of a task management method according to another embodiment of this application; and
FIG. 12 is a schematic flowchart of a task management method according to another embodiment of this application.

### DESCRIPTION OF EMBODIMENTS

It should be noted that, in this application, "at least one" means one or more, and "a plurality of" means two or more. The term "and/or" describes an association relationship for describing associated objects and represents that three relationships may exist. For example, A and/or B may represent the following three cases: Only A exists, both A and B exist, and only B exists. A and B each may be singular or plural. In the specification, claims, and accompanying drawings of this application, the terms "first", "second", "third", "fourth", and the like (if existing) are intended to distinguish between similar objects but do not necessarily indicate a specific order or sequence.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. To be precise, the word such as "example" or "for example" is intended to present a related concept in a specific manner. In a case that no conflict occurs, the following embodiments and the features in embodiments may be mutually combined.

For ease of understanding, examples of some concepts related to embodiments of this application are described for reference.

An operating system (operating system, OS) is a program that manages computer hardware and software resources, and is a kernel and a cornerstone of a computer system.

The kernel establishes a platform for communication between computer software and hardware. The kernel provides system services, such as file management, virtual memory, and device input/output (input/output, I/O).

User mode is also referred to as user space, and is active space for an upper-layer application. Execution of the application depends on a resource provided by the kernel, for example, a central processing unit (central processing unit, CPU) resource, a storage resource, or an I/O resource.

Kernel mode is also referred to as kernel space, and is used to control hardware resources of a computer and provide an environment for running the upper-layer application.

Garbage collection (garbage collection, GC) means releasing space occupied by garbage.

Just-in-time-compilation (Just-in-time-Compilation, JIT) is also referred to as dynamic translation or run-time compilation. This is a method of executing computer code. This method relates to compilation during execution of a program (at run time) rather than before execution.

A Java virtual machine (Java virtual machine, JVM) is a specification used for computer devices and may be implemented in different manners (software or hardware). The Java virtual machine includes a bytecode instruction set, a group of registers, a stack, a garbagecollected heap, and a storage method domain.

A process (process) is a program running activity for a data set on a computer. This is a basic unit for a system to allocate and schedule resources and is a basis of an operating system structure. The process is a basic execution instance of a program. In a contemporary threadoriented computer structure, the process is a container of threads. A program is a description of instructions, data, and an organization form thereof, and the process is an entity of the program. The process can be considered as an independent program with complete data space and code space in the memory. Data and variables owned by the process belong only to the process itself.

A thread is a minimum unit for performing operations in a process, in other words, a basic unit for execution of processor scheduling. If the process is understood as a task logically completed by the operating system, a thread represents one of a plurality of possible subtasks for completing the task. In other words, the thread is included in the process. One process includes one or more threads that share same code and global data.

A task (task) includes actions performed by a user on a computer and corresponding response events (such as mouse clicking and right-clicking, opening a dialog box, closing a file, and starting a program). The task is a general term and means an activity completed by software. In embodiments of this application, a task may be a process or a thread. In short, the task means a series of operations that work together to achieve a specific purpose, for example, a task for reading data and storing the data into a memory may be implemented as a process or as a thread (or as an interrupt task).

An electronic device may communicate with another electronic device or server through a communication network. An electronic device used in embodiments of this application may be a communication device, for example, may be a server or a terminal device. The terminal device may include at least one of a mobile phone, a foldable electronic device, a tablet computer, a personal computer (personal computer, PC), a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle mounted device, a smart home device, or a smart city device. A specific type of the electronic device is not specially limited in embodiments of this application. The communication network may be a wired network or a wireless network. For example, the communication network may be a local area network (local area network, LAN), or may be a wide area network (wide area network, WAN), for example, the Internet. When the communication network is the local area network, the communication network may be, for example, a short-range communication network, for example, a wireless fidelity (wireless fidelity, Wi-Fi) hotspot network, a Wi-Fi P2P network, a Bluetooth network, a ZigBee network, or a near field communication (near field communication, NFC) network. When the communication network is the wide area network, the communication network may be, for example, a 3rd generation wireless telephone technology (3rd generation, 3G) network, a 4th generation mobile communication technology (4th generation, 4G) network, a 5th generation mobile communication technology (5th generation, 5G) network, a future evolved public land mobile network (public land mobile network, PLMN), or the Internet.

In some embodiments, one or more APPs (applications) may be installed on the electronic device. The APP, which may be referred to as an app for short, is a software program that can implement one or more specific functions. For example, the APP may be an instant messaging application, a video application, an audio application, and an image capture application, or a cloud desktop application. The instant messaging application may include, for example, Messages, WeChat^{®} (WeChat^{®}), WhatsApp Messenger^{®}, Line^{®} (Line^{®}), Instagram^{®} (Instagram^{®}), Kakao Talk^{®}, and DingTalk^{®}. The image capture application may include, for example, a camera application (a system camera or a third-party camera application). The video application may include, for example, YouTube^{®}, Twitter^{®}, TikTok^{®}, iQIYI^{®}, and Tencent Video^{®}. The audio application may include, for example, KuGou Music^{®}, XiaMi Music^{®}, and QQ Music^{®}. An application mentioned in the following embodiments may be a system application installed when the electronic device is delivered from the factory, or may be a third-party application downloaded from a network or obtained from another electronic device when a user uses the electronic device.

The electronic device is installed with but not limited to iOS^{®}, Android^{®} (Android^{®}), Windows Mobile^{®}, HarmonyOS^{®}, or another operating system.

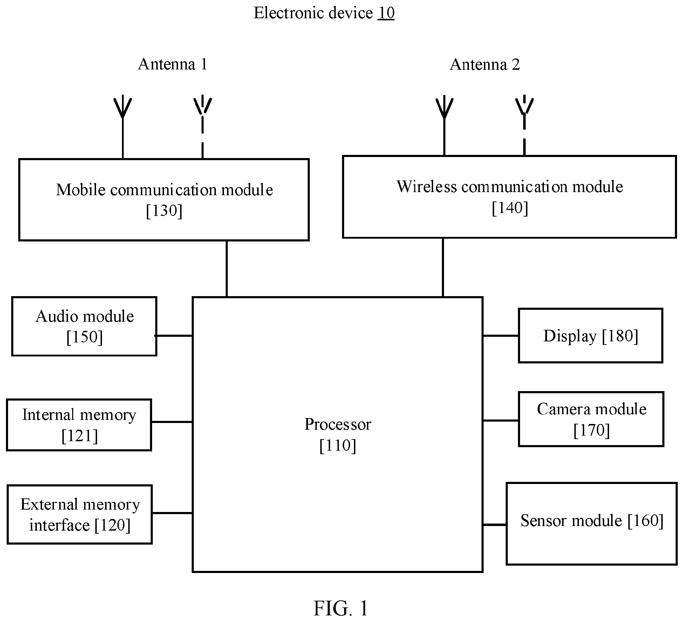

FIG. 1 shows a diagram of a structure of an electronic device 10.

The electronic device 10 may include a processor 110, an external memory interface 120, an internal memory 121, an antenna 1, an antenna 2, a mobile communication module 130, a wireless communication module 140, an audio module 150, a sensor module 160, a camera module 170, a display 180, and the like.

It may be understood that the structure shown in embodiments of this application does not constitute a specific limitation on the electronic device 10. In some other embodiments of this application, the electronic device 10 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The processor may generate an operation control signal based on instruction operation code and a time sequence signal, to complete control of instruction reading and instruction execution.

A memory may be disposed in the processor 110, and is configured to store instructions and data. In some embodiments, the memory in the processor 110 may be a cache memory. The memory may store instructions or data that is used or frequently used by the processor 110. If the processor 110 needs to use the instructions or data, the processor 110 may directly invoke the instructions or data from the memory, to avoid repeated access and reduce waiting time of the processor 110. Therefore, system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The processor 110 may be connected to a module, for example, an audio module, a wireless communication module, a display, or a camera through at least one of the foregoing interfaces.

It may be understood that an interface connection relationship between the modules shown in embodiments of this application is merely an example for description, and does not constitute a limitation on the structure of the electronic device 10. In some other embodiments of this application, the electronic device 10 may alternatively use an interface connection manner different from that in the foregoing embodiment, or a combination of a plurality of interface connection manners.

A wireless communication function of the electronic device 10 may be implemented through the antenna 1, the antenna 2, the mobile communication module 130, the wireless communication module 140, the modem processor, the baseband processor, and the like.

The antenna 1 and the antenna 2 are configured to transmit and receive an electromagnetic wave signal. Each antenna of the electronic device 10 may be configured to cover one or more communication frequency bands. Different antennas may also be multiplexed to improve antenna utilization. For example, the antenna 1 may be multiplexed as a diversity antenna of a wireless local area network. In some other embodiments, the antennas may be used in conjunction with a tuning switch.

The mobile communication module 130 may provide a solution to wireless communication such as 2G/3G/4G/5G applicable to the electronic device 10. The mobile communication module 130 may include at least one filter, a switch, a power amplifier, a low noise amplifier, and the like. The mobile communication module 130 may receive an electromagnetic wave through the antenna 1, perform processing such as filtering or amplification on the received electromagnetic wave, and transmit the electromagnetic wave to the modem processor for demodulation. The mobile communication module 130 may further amplify a signal modulated by the modem processor, and convert the signal into an electromagnetic wave for radiation through the antenna 1. In some embodiments, at least some functional modules of the mobile communication module 130 may be disposed in the processor 110. In some embodiments, at least some functional modules of the mobile communication module 130 and at least some modules of the processor 110 may be disposed in a same component.

The modem processor may include a modulator and a demodulator. The modulator is configured to modulate a to-be-sent low-frequency baseband signal into a medium-high frequency signal. The demodulator is configured to demodulate the received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio module, or displays an image or a video through the display 180. In some embodiments, the modem processor may be an independent device. In some other embodiments, the modem processor may be independent of the processor 110, and disposed in a same device as the mobile communication module 130 or another functional module.

The wireless communication module 140 may provide a solution for wireless communication such as a wireless local area network (wireless local area network, WLAN), Bluetooth (Bluetooth, BT), Bluetooth low energy (Bluetooth low energy, BLE), ultra wide band (ultra wide band, UWB), a global navigation satellite system (global navigation satellite system, GNSS), frequency modulation (frequency modulation, FM), NFC, an infrared (infrared, IR) technology, and the like to be applied to the electronic device 10. The wireless communication module 140 may be one or more components that integrate at least one communication processing module. The wireless communication module 140 receives the electromagnetic wave through the antenna 2, performs frequency modulation and filtering processing on the electromagnetic wave signal, and sends a processed signal to the processor 110. The wireless communication module 140 may further receive a to-be-sent signal from the processor 110, perform frequency modulation and amplification on the signal, and convert a processed signal into the electromagnetic wave for radiation through the antenna 2.

In some embodiments, in the electronic device 10, the antenna 1 and the mobile communication module 130 are coupled, and the antenna 2 and the wireless communication module 140 are coupled, so that the electronic device 10 can communicate with a network and another device through a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 10 may implement a display function through the GPU, the display 180, the application processor, and the like. The GPU is a microprocessor for image processing, and is connected to the display 180 and the application processor. The GPU is configured to perform mathematical and geometric computation, and render an image. The processor 110 may include one or more GPUs that execute program instructions to generate or change display information.

The sensor module includes a touch sensor, a pressure sensor, a fingerprint sensor, and the like. The camera module 170 includes a camera. The display 180 is configured to display an image, a video, or the like. The display 180 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-Led, a micro-Led, a Micro-OLED, a quantum dot light-emitting diode (quantum dot light-emitting diodes, QLED), or the like. In some embodiments, the electronic device 10 may include one or N displays 180.

The electronic device 10 may implement a photographing function through the camera module 170, the ISP, the video codec, the GPU, the display 180, the application processor AP, the neural-network processing unit NPU, and the like.

The digital signal processor is configured to process a digital signal, and may process another digital signal. For example, when the electronic device 10 selects a frequency, the digital signal processor is configured to perform Fourier transformation on frequency energy.

The video codec is configured to compress or decompress a digital video. The electronic device 10 may support one or more types of video codecs. In this way, the electronic device 10 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, and simulates a biological neural network structure such as a transmission mode between neurons in a human brain to perform rapid processing on input information, and can perform continuous selflearning. Applications such as intelligent cognition of the electronic device 10, for example, image recognition, facial recognition, speech recognition, and text understanding, may be implemented through the NPU.

The external memory interface 120 may be configured to connect to an external storage card, for example, a micro SD card, to extend a storage capability of the electronic device 10. The external memory card communicates with the processor 110 through the external memory interface 120, to implement a data storage function. For example, files such as music or videos are stored in the external storage card. Alternatively, files such as music or videos are transmitted from the electronic device to the external storage card.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (for example, audio data or a phone book) created during use of the electronic device 10, and the like. In addition, the internal memory 121 may include a high-speed random access memory, and may further include a nonvolatile memory, for example, at least one magnetic disk storage device, a flash memory, or a universal flash storage (universal flash storage, UFS). The processor 110 runs the instructions stored in the internal memory 121, and/or the instructions stored in the memory disposed in the processor, to perform various function methods or data processing of the electronic device 10.

The audio module 150 is configured to convert digital audio information into an analog audio signal for output, and is also configured to convert analog audio input into a digital audio signal. The audio module 150 may be further configured to code and decode an audio signal. In some embodiments, the audio module 150 may be disposed in the processor 110, or some functional modules in the audio module 150 are disposed in the processor 110.

A software system of the electronic device 10 may use a layered architecture, an eventdriven architecture, a microkernel architecture, a microservice architecture, or a cloud architecture. In embodiments of this application, a software structure of the electronic device 10 is described by using an Android system with a layered architecture as an example.

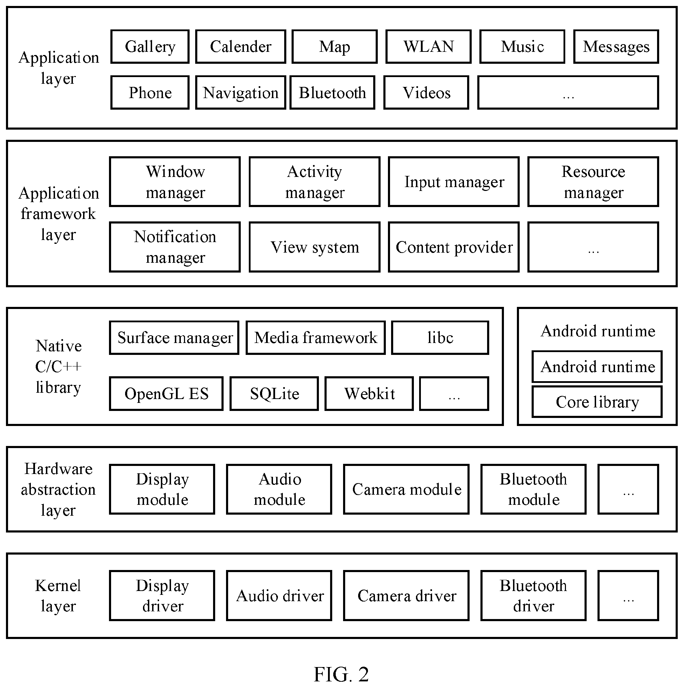

FIG. 2 is a block diagram of a software structure of the electronic device 10 according to an embodiment of this application.

A layered architecture divides software into several layers, each with a clear role and division of labor. The layers communicate with each other through a software interface. In some embodiments, the Android system is divided into five layers: an application layer, an application framework layer, an Android runtime (Android runtime, ART) and a native C/C++ library, a hardware abstraction layer (Hardware abstraction layer, HAL), and a kernel layer from top to bottom.

The application layer may include a series of application packages.

As shown in FIG. 2, the application packages may include applications such as Camera, Gallery, Calendar, Phone, Map, Navigation, WLAN, Bluetooth, Music, Videos, and Messages.

The application framework layer provides an application programming interface (application programming interface, API) and a programming framework for an application of the application layer. The application framework layer includes some predefined functions.

As shown in FIG. 2, the application framework layer may include a window manager, a content provider, a view system, a resource manager, a notification manager, an activity manager, an input manager, and the like.

The window manager provides a window manager service (window manager service, WMS), which can be used for window management, window animation management, surface management, and as a transit point for an input system.

The content provider is configured to: store and obtain data, and enable the data to be accessed by an application. The data may include a video, an image, audio, calls that are made and received, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The activity manager can provide an activity manager service (activity manager service, AMS), which can be used for startup, switch, and scheduling of system components (for example, an activity, a service, a content provider, a broadcast receiver), and management and scheduling of an application process.

The input manager can provide an input manager service (input manager service, IMS), which can be used for system input management, for example, a touchscreen input, a key input, and a sensor input. The IMS obtains an event from an input device node and allocates the event to an appropriate window through interaction with the WMS.

The Android runtime includes a core library and Android runtime. The Android runtime is responsible for converting source code into machine code. The Android runtime mainly includes an ahead of time (ahead of time, AOT) compilation technology and a just in time (just in time, JIT) compilation technology.

The core library is mainly used to provide functions of basic Java libraries, such as a basic data structure library, a mathematics library, an IO library, a tool library, a database, and a network library. The core library provides the API for the user to develop the Android application.

The native C/C++ library may include a plurality of functional modules, such as a surface manager (surface manager), a media framework (media framework), libc, OpenGL ES, SQLite, and Webkit.

The surface manager is configured to: manage a display subsystem, and provide fusion of 2D and 3D layers for a plurality of applications. The media framework supports playback and recording of audio and videos in a plurality of commonly used formats, static image files, and the like. The media library may support a plurality of audio and video encoding formats, for example, MPEG4, H.264, MP3, AAC, AMR, JPG and PNG. OpenGL ES provides drawing and manipulation of 2D and 3D graphics in the application. SQLite provides a lightweight relational database for the application of the electronic device 10.

The hardware abstraction layer runs in user space (user space), encapsulates drivers of the kernel layer, and provides an invoking interface for the upper layer.

The kernel layer is a layer between hardware and software. The kernel layer includes at least a display driver, a camera driver, an audio driver, and a sensor driver.

As configurations of intelligent electronic devices such as smartphones and personal computers become increasingly high, users have increasingly high requirements on performance of the intelligent electronic devices. Particularly, in a key scenario with frequent human-computer interaction and obvious visual perception, for example, an application startup scenario, a fingerprint recognition scenario, or a display turn-on scenario, fast application startup, fast fingerprint recognition, and fast display turn-on can provide better performance experience for the user. However, in a human-computer interaction procedure, in addition to executing a task in the key scenario, a system further needs to execute a task generated by another application or service, for example, a task generated by a background application. If there are excessive tasks other than that in the key scenario, or a high-load task is included, a large quantity of system resources are occupied, such as CPU resources and storage resources. Consequently, there are no enough system resources to be allocated to the task generated in key scenario, causing a system performance bottleneck and affecting user experience.

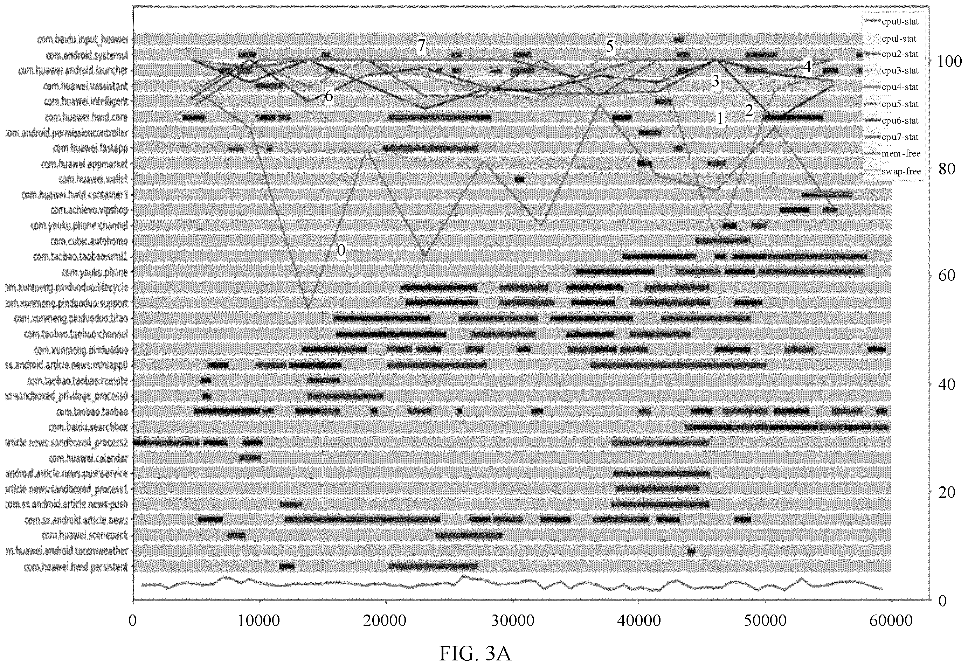

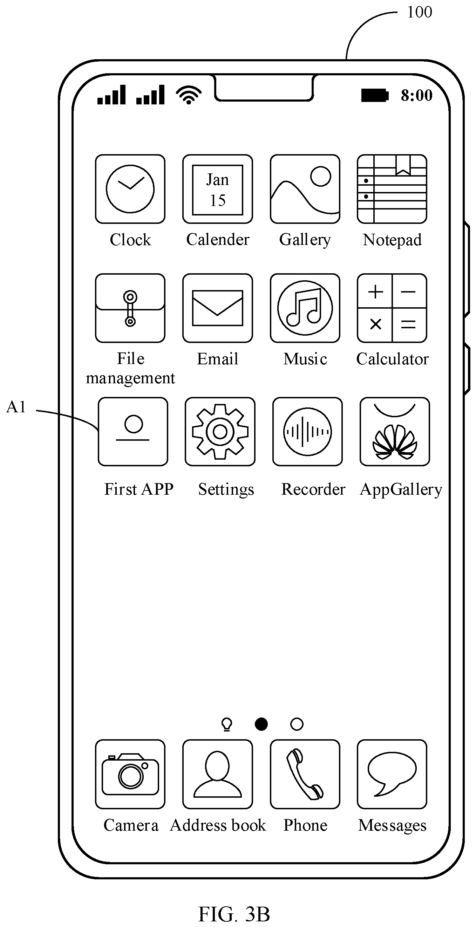

To prevent the high-load task from occupying excessive system resources and to avoid running out of system resources that are used to process the task in the key scenario, embodiments of this application provide a task management method. For ease of understanding the task management method provided in embodiments of this application, the following describes an example of an application scenario of the task management method provided in embodiments of this application with reference to FIG. 3A and FIG. 3B.

An operating system and application software may be installed on the electronic device 10. The application software may be software that provides a service or is oriented to a user, or the application software may be another type of software. This is not limited in this application. For example, the electronic device 10 is a server, and the application software may be service software installed on the server. The electronic device 10 is a mobile phone, and the application software may be an APP installed on the mobile phone.

When an application on the electronic device runs, mechanisms such as just-in-time compilation and garbage collection ensure rapid running of the application. A process of each application includes a Java virtual machine, configured to frequently execute a task such as just-in-time compilation or garbage collection. This occupies CPU resources of a system. Garbage collection is used as an example. Execution time ranges from dozens of milliseconds to hundreds of milliseconds. Some garbage collection tasks even take seconds.

Refer to FIG. 3A, where a horizontal axis represents time in units of milliseconds, and a right vertical axis represents a usage percentage, for example, CPU usage. Curves 0 to 7 respectively represent usage of CPU cores 0 to 7. In a scenario in which 10 applications are clicked consecutively within 60 seconds, in the system background, each application process executes a plurality of garbage collection tasks in this phase, and at a same moment, a scenario in which a plurality of processes simultaneously execute the garbage collection tasks exists in the system. Consequently, CPU usage increases Frequent execution of the tasks occupies excessive CPU resources, and therefore, the tasks are high-load tasks in the system. If the high-load tasks are generated simultaneously with a key scenario, CPU resources for the key scenario will be insufficient, causing an obvious performance bottleneck and affecting user experience. Therefore, it is necessary to manage high-load tasks of all applications in the system in a unified manner.

Refer to FIG. 3B, where an example in which the electronic device 10 is a mobile phone is used for description. A first APP A1 is installed on the electronic device 10, and the first APP A1 may be an instant messaging APP, a video APP, an audio APP, or the like. The electronic device 10 may automatically start up the first APP A1 or start up the first APP A1 in response to an operation instruction of a user. An operating system may create a process P1 for the first APP A1, where the process P1 is a running instance of the firstAPP A1. After being started up, the first APP A1 is a foreground application. When receiving a compilation task, the system intercepts the compilation task and determines whether the compilation task comes from the foreground application. If the compilation task comes from the foreground application, the system adds the compilation task to a queue for processing. If the compilation task comes from a background application, the system suspends the compilation task and does not execute the task. However, if whether to execute the task is determined only based on whether the task comes from the foreground application, there is a lack of perception and control of a system global status. Consequently, a wrong decision is made. For example, a background key task cannot be executed, causing abnormal logic of the background application. Consequently, a system function is affected and user experience is further affected.

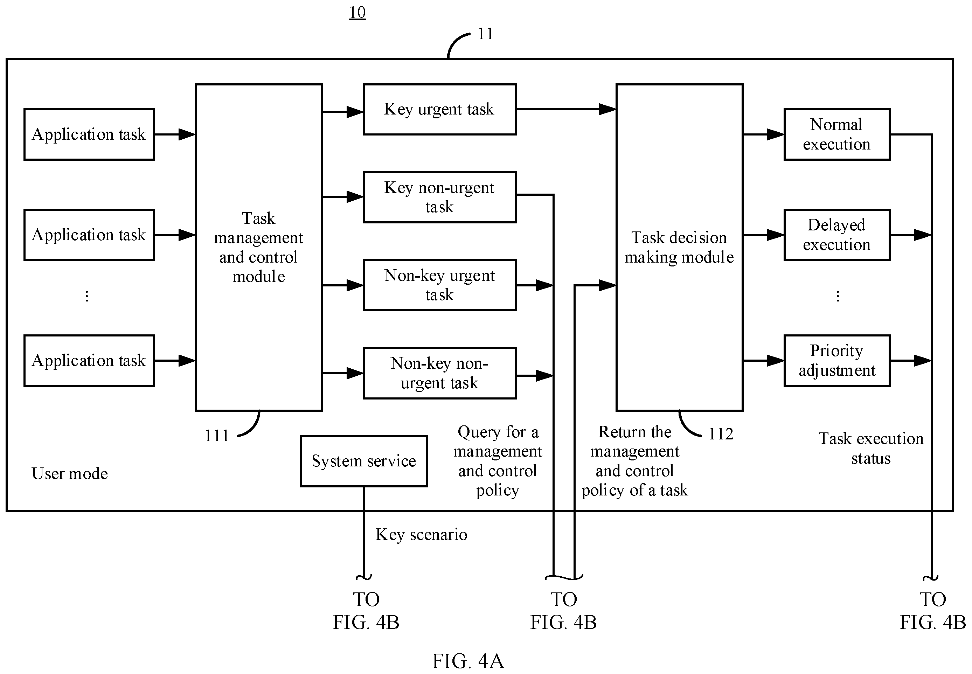

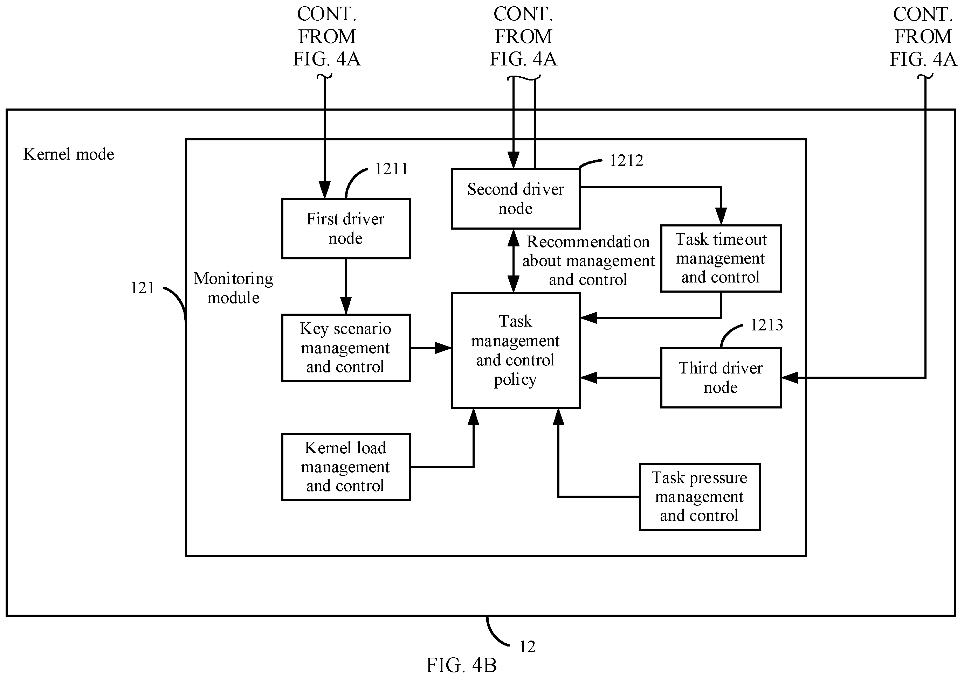

The following describes an example of a diagram of an architecture in which an electronic device implements task management according to an embodiment of this application with reference to FIG. 4A and FIG. 4B.

For example, the electronic device 10 may include user mode 11 and kernel mode 12. The user mode 11 includes a task management and control module 111 and a task decision making module 112. The kernel mode 12 includes a monitoring module 121.

The task management and control module 111 is configured to manage and control, based on a type, a high-load task generated by the application in the user-mode. The monitoring module 121 is configured to monitor a system global status, for example, a system key event and system load information, and determine a recommendation about management and control of the high-load task based on the system global status. The task decision making module 112 is configured to determine an execution decision of the task based on the recommendation about management and control from the monitoring module 121, and send an execution status of the task to the monitoring module 121.

In an embodiment of this application, the monitoring module 121 is an MISC (macro instruction set computer, macro instruction set computer) device driver module of a kernel, and provides a file node exposure interface for use in the user mode. The monitoring module 121 includes a first driver node 1211, a second driver node 1212, and a third driver node 1213. The first driver node 1211 is an hwgtm_system node, and the second driver node 1212 and the third driver node 1213 are hwgtm_client nodes. The foregoing driver nodes are interfaces through which the monitoring module receives and sends data.

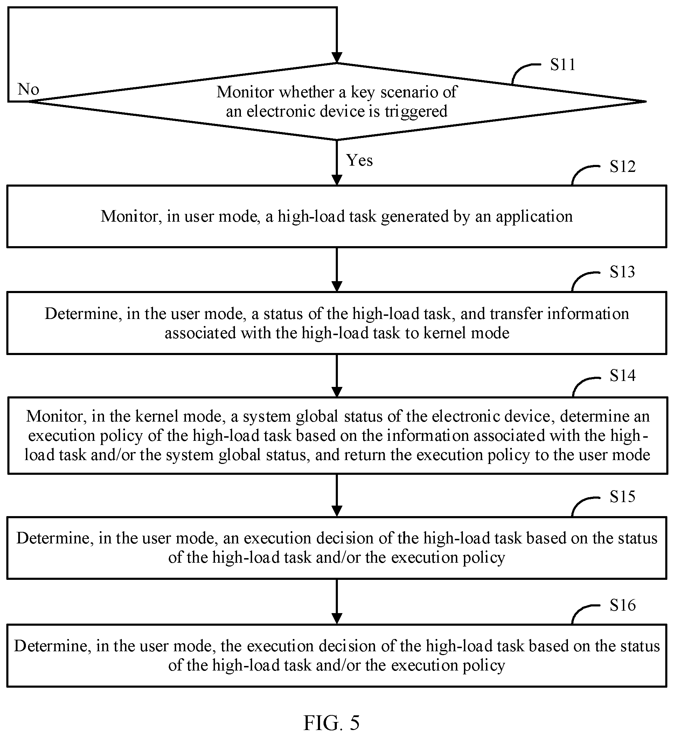

The following describes an example of a schematic flowchart of a task management method according to an embodiment of this application with reference to FIG. 5. The method is applied to an electronic device. The task management method includes the following steps.

S11: Monitor whether a key scenario of the electronic device is triggered.

In an embodiment of this application, the key scenario is a key application scenario that affects user experience. The key scenario includes but is not limited to application startup, user identity identification, display interface drawing, and screen-on and screen-off of a display. The application startup means starting up the application for the first time or starting up the application after the application is killed. The user identity identification includes but is not limited to fingerprint recognition, facial recognition, iris recognition, and the like. The display interface drawing means drawing and rendering an updated display interface in response to a user operation or when the application automatically updates a display interface. The user operation includes, for example, a touch operation (tapping, double-tapping, sliding, or the like) performed by the user on the display.

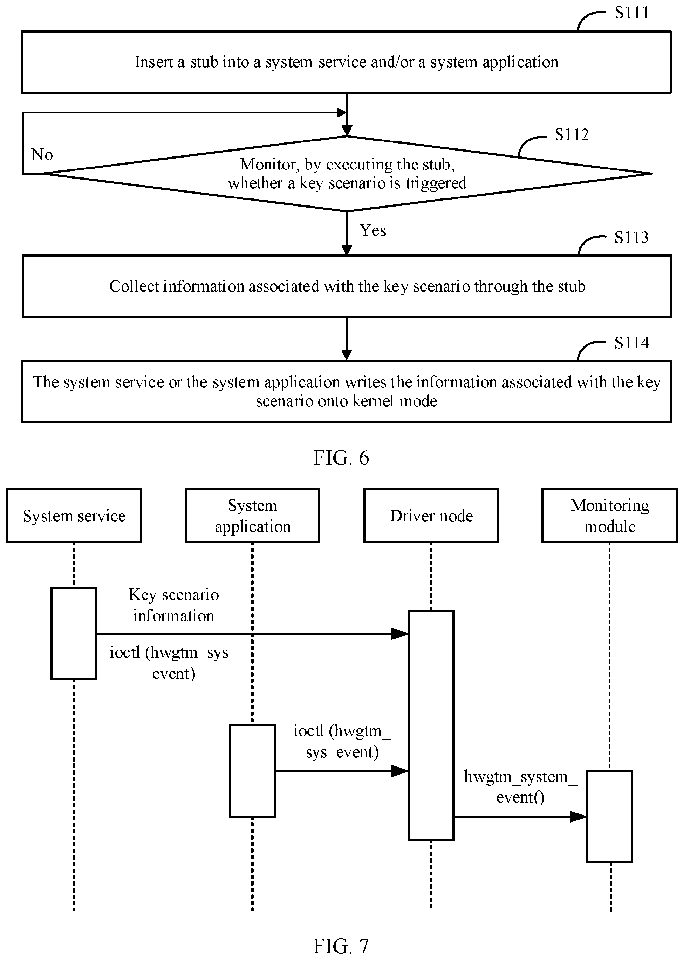

In an embodiment of this application, a detailed procedure of monitoring whether the key scenario of a system is triggered is shown in FIG. 6, and specifically includes the following steps.

S111: Insert a stub into a system service and/or a system application.

In an embodiment of this application, the system service (SystemService) is a manager service of an electronic device system, for example, a window manager service (WindowManagerService), an activity manager service (ActivityManagerService), or an input manager service (InputManagerService). The system application is an application preset in the system, for example, Phone, Messages, or Settings.

In an embodiment of this application, on the premise of ensuring logic integrity of an original program, a probe, which is used as a stub, is inserted into a program of a system service and/or a system application by using a program instrumentation technology. The stub is a code segment for information collection, and may be an assignment statement or a function call for collecting coverage information. The stub may be executed to collect information in code of each application, and collect dynamic information during running of the application.

S112: Monitor, by executing the stub, whether the key scenario is triggered.

In an embodiment of this application, a key scenario flag flag is preset for a task corresponding to each scenario. A flag value of a key scenario flag corresponding to the key scenario may be set to a first value, for example, 1. A flag value of a key scenario flag of a non-key scenario may be set to a second value, for example, 0. The monitoring, by executing the stub, whether the key scenario is triggered includes: detecting, by executing the stub, whether a flag value of a key scenario flag corresponding to a task generated by the application is a preset value (the preset value is, for example, the first value); and if the flag value of the key scenario flag of the task is the preset value (for example, 1), it may be determined that a scenario in which the task is generated is the key scenario, and then it is determined that the key scenario is triggered; or if the flag value of the key scenario flag of the task is not the preset value (for example, 0), it may be determined that a scenario in which the task is generated is not the key scenario, and then it is determined that the key scenario is not triggered.

S113: Collect information associated with the key scenario through the stub.

In an embodiment of this application, the information associated with the key scenario includes but is not limited to names of an application and a process that execute the key scenario.

S114: The system service or the system application writes the information associated with the key scenario onto kernel mode.

The system service or the system application writes the information associated with the key scenario onto the kernel mode by communicating with the kernel mode. In an embodiment of this application, the system service or the system application writes the information associated with the key scenario onto a first driver node of a monitoring module (for example, the monitoring module 121 in FIG. 4B) based on an input/output control (input/output control, ioctl) method. The first driver node sends the information associated with the key scenario to the monitoring module. An example in which "key scenario information" indicates the information associated with the key scenario is used for description. Refer to FIG. 7. After receiving an instruction of the system service or the system application, the driver node sends the key scenario information hwgtm_system_event to the monitoring module. After receiving the key scenario information, the monitoring module is activated for managing and controlling the key scenario, and starts to monitor the system global status of the electronic device and manage and control a high-load task.

In other embodiments of this application, the system service or the system application may alternatively write the information associated with the key scenario onto the monitoring module through a system call.

S12: If it is monitored that the key scenario is triggered, monitor, in user mode, a high-load task generated by the application.

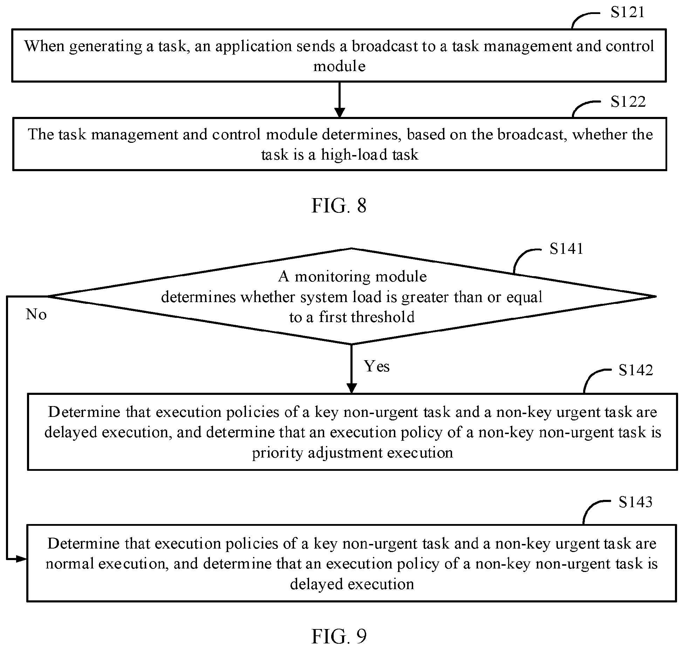

In an embodiment of this application, a detailed procedure of monitoring, in the user mode, the high-load task generated by the application is shown in FIG. 8, and specifically includes the following steps.

S121: When generating a task, the application sends a broadcast to a task management and control module (for example, the task management and control module 111 in FIG. 4A).

In an embodiment of this application, content of the broadcast includes information associated with the task. The information associated with the task includes the status of the high-load task, and a package name, a version number, and a task name of the application that generates the high-load task. The package name is a unique identifier of the application. For example, the package name is com.ss.android.article.news, the version number is 5.33, and the task name is JIT or GC.

S122: The task management and control module determines, based on the broadcast, whether the task is the high-load task.

In an embodiment of this application, the monitoring module (for example, the monitoring module 121 in FIG. 4B) records historical load information of all tasks executed by the electronic device system. The historical load information includes highest load and/or average load in a task execution process, and the load may include but is not limited to one or more of the following: CPU usage, memory usage, or pressure stall information (pressure stall information, PSI). A PSI program is an open-source program used to evaluate system resource pressure. The PSI indicates task execution stalling time caused by resource pressure, quantifies task execution disruptions caused by hardware resource shortage, and collects statistics on time for which the task in the system waits for a hardware resource. The PSI is used as an indicator to measure the pressure on hardware resources. Longer stalling time indicates higher resource pressure. The hardware resources include a CPU, a memory, and IO (Input/Output, input/output).

In an embodiment of this application, that the task management and control module determines, based on the broadcast, whether the task is the high-load task includes: The task management and control module obtains the information associated with the task via the broadcast, and sends the information associated with the task to the monitoring module. The monitoring module queries the historical load information of the task, and returns, to the task management and control module, the historical load information that is of the task and that is obtained through query. The task management and control module determines whether the historical load information of the task is greater than or equal to a load threshold. If the historical load information of the task is greater than or equal to the load threshold, the task management and control module determines that the task is the high-load task. Alternatively, if the historical load information of the task is less than the load threshold, the task management and control module determines that the task is not the high-load task. Optionally, if the load information is the CPU usage, the load threshold may be 20%, if the load information is the memory usage, the load threshold may be 20%, or if the load information is the PSI, the load threshold may be 0.1 seconds.

In another embodiment of this application, that the task management and control module determines, based on the broadcast, whether the task is the high-load task includes: The task management and control module obtains the information associated with the task via the broadcast, and sends the information associated with the task to the monitoring module. The monitoring module queries about whether the task has been executed by the system. If the task is a task that has been executed by the system, the monitoring module queries the historical load information of the task, and returns, to the task management and control module, the historical load information that is of the task and that is obtained through query. The task management and control module determines whether the historical load information of the task is greater than or equal to a load threshold. If the historical load information of the task is greater than or equal to the load threshold, the task management and control module determines that the task is the high-load task. Alternatively, if the historical load information of the task is less than the load threshold, the task management and control module determines that the task is not the high-load task. If the task is a task that has not been executed by the system, the monitoring module returns a query result to the task management and control module, and the task management and control module determines, based on the query result, that the task is not the high-load task.

In other embodiments, if the task is a task that has not been executed by the system, the monitoring module queries a task of a same type as the task, queries load information of the task of the same type, and returns historical load information obtained through query to the task management and control module. The task management and control module determines whether the historical load information of the task of the same type is greater than or equal to a load threshold. If the historical load information of the task of the same type is greater than or equal to the load threshold, the task management and control module determines that the task is the high-load task. Alternatively, if the historical load information of the task of the same type is less than the load threshold, the task management and control module determines that the task is not the high-load task.

In another embodiment of this application, that the task management and control module determines, based on the broadcast, whether the task is the high-load task includes: The task management and control module obtains the information associated with the task via the broadcast, and determines whether the task has a high-load task identifier. If the task has the high-load task identifier, the task management and control module determines that the task is the high-load task. Alternatively, if the task does not have the high-load task identifier, the task management and control module determines that the task is not the high-load task.

In the another embodiment of this application, the high-load task identifier is added to the task, to mark the task as the high-load task. Specifically, the monitoring module may monitor load information of each task in an execution procedure. If in a first preset time period in which a task is executed, a quantity of times that load information of the task is greater than or equal to the load threshold is greater than or equal to a preset quantity of times, the high-load task identifier is added to the task, to mark the task as the high-load task. If in a second preset time period in which the task with the high-load task identifier is executed, a quantity of times that the load information of the task with the high-load task identifier is greater than or equal to the load threshold is less than the preset quantity of times, the monitoring module cancels the high-load task identifier of the task. Optionally, the first preset time period is one week, the second preset time period is one month, and the preset quantity of times is 10.

S13: Determine, in the user mode, a status of the high-load task, and transfer information associated with the high-load task to the kernel mode.

In an embodiment of this application, the determining, in the user mode, a status of a high-load task includes: performing classification on the high-load task in the user mode, to determine a type of the high-load task, and using the type of the high-load task as the status of the high-load task.

In an embodiment of this application, types of the high-load task include but are not limited to a key urgent task, a key non-urgent task, a non-key urgent task, and a non-key non-urgent task.

In an embodiment of this application, that the task management and control module performs classification on the high-load task includes: determining whether the high-load task is generated by a foreground process, and determining whether the high-load task has expired; if the high-load task is generated by the foreground process and the high-load task has expired, determining that the high-load task is the key urgent task; if the high-load task is generated by the foreground process and the high-load task has not expired, determining that the high-load task is the key non-urgent task; if the high-load task is not generated by the foreground process and the high-load task has expired, determining that the high-load task is the non-key urgent task; or if the high-load task is not generated by the foreground process and the high-load task has not expired, determining that the high-load task is the non-key non-urgent task.

The foreground process is a process being processed by the system, that is, a process for processing the key scenario. If the task is generated in the key scenario, the task is a key task. To avoid affecting user experience, the task has a priority for execution. If the task is not generated by the foreground process, but is generated by a background process, because load is high, execution may be delayed to avoid affecting the foreground process.

In an embodiment of this application, each task generated by the application has expected processing time, where the expected processing time is time at which the task is expected to be executed, and a baseline for the expected processing time is time measured in milliseconds (ms) from the moment the electronic device is powered on. For example, if the expected processing time of a task task 1 is 100 ms, in other words, the expected processing time of the task 1 is the 100^{th} ms after the electronic device is powered on.

In an embodiment of this application, the determining whether the task has expired includes: determining whether current time exceeds the expected processing time of the task; if the current time exceeds the expected processing time of the task, determining that the task has expired; or if the current time does not exceed the expected processing time of the task, determining that the task has not expired. The current time may be time elapsed after the electronic device is powered on.

For example, if the time elapsed after the electronic device is powered on is 120 ms, and the expected processing time of the task is 130 ms, the current time does not exceed the expected processing time of the task, and it is determined that the task has not expired. For another example, if the time elapsed after the electronic device is powered on is 150 ms, and the expected processing time of the task is 130 ms, the current time exceeds the expected processing time of the task, and it is determined that the task has expired.

In an embodiment of this application, if it is determined in the user mode that the high-load task is the key urgent task, it is determined that an execution decision of the high-load task is normal execution, or if it is determined in the user mode that the high-load task is not the key urgent task, the information associated with the high-load task is transferred to the kernel mode.

S14: Monitor, in the kernel mode, the system global status of the electronic device, determine an execution policy of the high-load task based on the information associated with the high-load task and/or the system global status, and return the execution policy to the user mode.

In an embodiment of this application, the system global status includes but is not limited to system load, duration of the key scenario, delay time of the high-load task, and a quantity of high-load tasks for priority adjustment execution, and the execution policy includes but is not limited to the normal execution, delayed execution, and the priority adjustment execution. The normal execution indicates immediate execution. The delayed execution indicates execution after a delay for preset time, and the preset time may be set based on an actual requirement. For example, the preset time is 200 ms. The priority adjustment execution indicates execution after determining priorities based on a queue of high-load tasks to be executed in the system. In other words, the high-load task is added to the queue of the high-load tasks to be executed in the system, and the tasks are executed based on a queue sequence. In other words, a task in the front of the queue has a higher execution priority.

In an embodiment of this application, a detailed procedure of determining the execution policy of the high-load task based on the information associated with the high-load task and/or the system global status is shown in FIG. 9, and specifically includes the following steps.

S141: A monitoring module determines whether the system load is greater than or equal to a first threshold.

Optionally, if the system load is the CPU usage, the first threshold is 70%. If the system load is the memory usage, the first threshold is 80%. If the system load is the PSI, the first threshold is 0.1 seconds.

S142: If the system load is greater than or equal to the first threshold, determine that execution policies of the key non-urgent task and the non-key urgent task are the delayed execution, and determine that the execution policy of the non-key non-urgent task is the priority adjustment execution.

In an embodiment of this application, if the task is not the key urgent task, the task management and control module transfers the information associated with the high-load task to a second driver node of the monitoring module in the input/output control method, and the second driver node sends the information associated with the high-load task to the monitoring module.

S143: If the system load is less than the first threshold, determine that execution policies of the key non-urgent task and the non-key urgent task are the normal execution, and determine that the execution policy of the non-key non-urgent task is the delayed execution.

In another embodiment of this application, the determining an execution policy of the high-load task based on the information associated with the high-load task and/or the system global status includes: A monitoring module determines whether the system load is greater than or equal to a first threshold, and determines whether the duration of the key scenario is less than or equal to a second threshold. If the system load is greater than or equal to the first threshold and the duration of the key scenario is less than or equal to the second threshold, it is determined that execution policies of the key non-urgent task and the non-key urgent task are the delayed execution, and it is determined that the execution policy of the non-key non-urgent task is the priority adjustment execution. Alternatively, if the system load is less than the first threshold or whether the duration of the key scenario is greater than the second threshold, it is determined that execution policies of the key non-urgent task and the non-key urgent task are the normal execution, and it is determined that the execution policy of the non-key non-urgent task is the delayed execution. Optionally, the second threshold is 2 seconds.

In another embodiment of this application, a monitoring module may determine an execution policy of the high-load task based on a type of the high-load task. Specifically, if the high-load task is the non-key urgent task, it is determined that a recommendation about an execution occasion of the high-load task indicates the delayed execution, and delay time is first preset time. If the high-load task is the key non-urgent task, it is determined that a recommendation about an execution occasion of the high-load task indicates the delayed execution, and delay time is second preset time. Alternatively, if the high-load task is the non-key non-urgent task, it is determined that a recommendation about an execution occasion of the high-load task indicates the priority adjustment execution. After determining the execution policy of the high-load task, the monitoring module sends the determined execution policy to a task decision making module by using the second driver node. Optionally, the first preset time is less than the second preset time.

In another embodiment of this application, the determining an execution policy of the high-load task based on the information associated with the high-load task and/or the system global status further includes: monitoring timeout of the high-load task for the delayed execution, and monitoring the quantity of the high-load tasks for the priority adjustment execution.

Specifically, the monitoring timeout of the task for the delayed execution, namely, management and control of task timeout, includes: detecting in real time whether the delay time of the high-load task for the delayed execution is greater than or equal to a third threshold; and if the delay time of the high-load task for the delayed execution is greater than or equal to the third threshold, updating the execution policy of the task for the delayed execution to the normal execution. Optionally, the third threshold is 1 second.

Specifically, the monitoring the quantity of the high-load tasks for the priority adjustment execution, namely, management and control of task pressure, includes: detecting in real time whether the quantity of the high-load tasks in a queue of tasks to be executed is greater than or equal to a fourth threshold; and if the quantity of the high-load tasks in the queue of the tasks is greater than or equal to the fourth threshold, updating an execution policy of at least one high-load task in the queue of the tasks to the normal execution. Optionally, the fourth threshold is 5.

S15: Determine, in the user mode, an execution decision of the high-load task based on the status of the high-load task and/or the execution policy.

In an embodiment of this application, the execution decision includes but is not limited to normal execution, delayed execution, and priority adjustment execution. If the high-load task is not the key urgent task, the task decision making module determines the execution policy that is of the high-load task and that is returned by the monitoring module as the execution decision of the high-load task. If the system load is greater than or equal to the first threshold, it is determined that execution strategies of the key non-urgent task and the non-key urgent task are the delayed execution, and it is determined that the execution decision of the non-key non-urgent task is the priority adjustment execution. If the system load is less than the first threshold, it is determined that execution strategies of the key non-urgent task and the non-key urgent task are the normal execution, and it is determined that the execution decision of the non-key non-urgent task is the delayed execution. Alternatively, if the high-load task is the key urgent task, the task decision making module determines that the execution decision of the high-load task is the normal execution.

S16: Send an execution status of the high-load task to the monitoring module in a procedure of executing the high-load task based on the execution decision.

In an embodiment of this application, the sending an execution status of the task to the monitoring module in a procedure of executing the task based on the execution decision includes: The application executes the high-load task based on the execution decision, and sends, to the monitoring module based on an input/output control method, request information, start information, and end information in the procedure of executing the task.

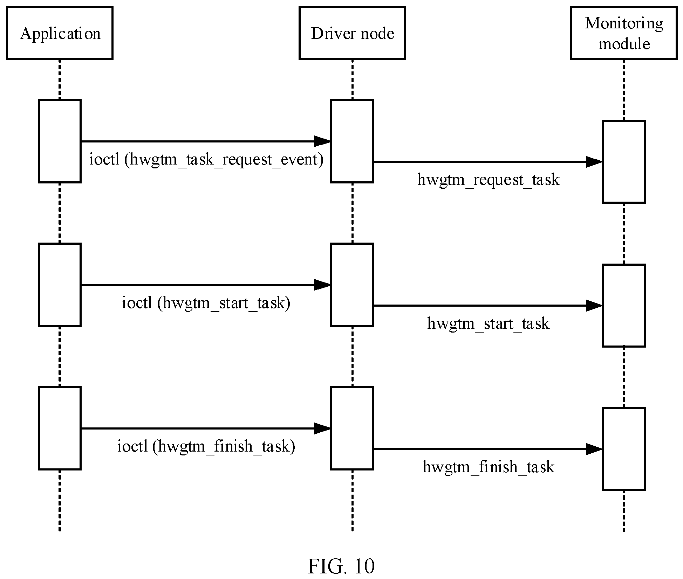

Refer to FIG. 10. Specifically, when generating a task, an application sends, based on an ioctl (hwgtm_task_request_event) instruction, request information for executing the task to a third driver node (for example, hwgtm_client). After receiving the request information, the third driver node sends the request information to a monitoring module based on hwgtm_request_task. When starting to execute the task, the application sends, based on an ioctl (hwgtm_start_task) instruction, start information of execution of the task to the third driver node. After receiving the start information, the third driver node sends the start information to the monitoring module based on hwgtm_start_task. Optionally, the start information includes time at which execution of the task starts. When completing the task, the application sends, based on an ioctl (hwgtm_finish_task) instruction, end information of execution of the task to the third driver node. After receiving the end information, the third driver node sends the end information to the monitoring module based on hwgtm_finish_task. Optionally, the end information includes time at which execution of the task is completed.

In an embodiment of this application, the monitoring module may determine, based on an execution status of the task, execution time of each task and a change of system load in an execution procedure.

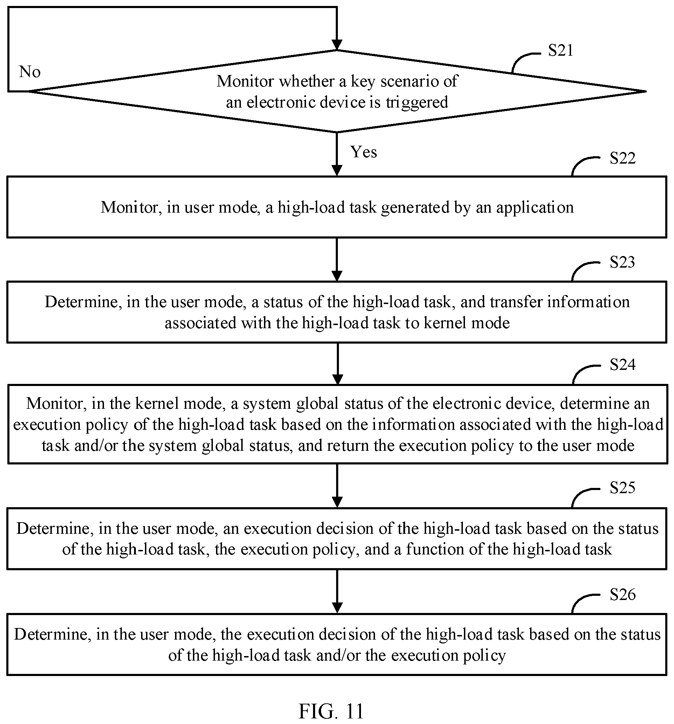

The following describes an example of a schematic flowchart of a task management method according to another embodiment of this application with reference to FIG. 11. The method is applied to an electronic device. The task management method includes the following steps.

S21: Monitor whether a key scenario of the electronic device is triggered.

S22: If it is monitored that the key scenario is triggered, monitor, in user mode, a high-load task generated by an application.

S23: Determine, in the user mode, a status of the high-load task, and transfer information associated with the high-load task to kernel mode.

S24: Monitor, in the kernel mode, a system global status of the electronic device, determine an execution policy of the high-load task based on the information associated with the high-load task and/or the system global status, and return the execution policy to the user mode.

S25: Determine, in the user mode, an execution decision of the high-load task based on the status of the high-load task, the execution policy, and a function of the high-load task.

For example, if current system load is greater than or equal to a first threshold, a type of the task is a non-key urgent task, a key non-urgent task, or a non-key non-urgent task, a function of the task is to reduce system load, and the monitoring module determines that an execution occasion of the task is normal execution. For example, a garbage collection task is a non-key non-urgent high-load task, but memory usage can be reduced by executing the garbage collection task, to reduce the system load. In this case, the monitoring module determines that the execution occasion of the garbage task is the normal execution.

S26: Send an execution status of the high-load task to the monitoring module in a procedure of executing the high-load task based on the execution decision.

Specific implementations of S21 to S23 and S26 are the same as specific implementations of S11 to S13 and S16, and details are not described herein again.

Embodiments of this application provide a high-load task management and control technology oriented to user experience. According to the technology, a current system global status can be sensed, so that a more accurate decision recommendation can be provided when an application in user mode initiates high-load tasks, to prevent the tasks from occupying excessive resources and affecting user experience.

In embodiments of this application, a monitoring module is added to a kernel, to sense a global task, resource, and scenario status of a current system, and then make a decision recommendation when the application in the user mode initiates the high-load tasks. This prevents the high-load tasks from affecting user experience. The monitoring module is responsible for monitoring recent system events and information about the high-load task, to provide a recommendation for the application in the user mode on whether to delay the high-load task.

For a requirement of managing and controlling the high-load task by the application, in embodiments of this application, a task management and control module is further added to the user mode. The task management and control module queries a kernel for a recommendation before the high-load task is initiated, and makes a running decision based on a returned recommendation and a current status, to avoid preempting resources of a foreground application. Performance of the foreground application is improved, and user experience is improved.

For a critical scenario to be concerned in terms of user experience, in embodiments of this application, a key scenario stub is further added to a user-mode system service. The stub can notify the monitoring module when a key scenario affecting user experience occurs, for example, a key scenario like application cold start, sliding on a screen, and fingerprint recognition.

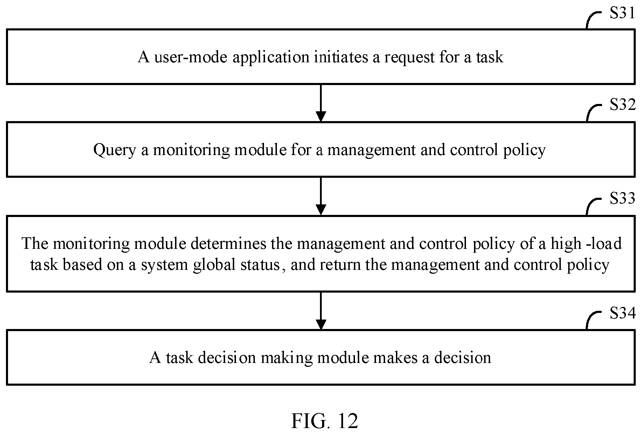

Refer to FIG. 12, which is a schematic flowchart of a task management method according to another embodiment of this application. The method is applied to an electronic device. The task management method includes the following steps.

S31: A user-mode application initiates a request for a high-load task.

S32: Query a monitoring module for a management and control policy of the high-load task.

S33: The monitoring module determines the management and control policy of the high-load task based on a system global status, and returns the management and control policy.

S34: A task decision making module makes an execution decision of the high-load task based on the management and control policy.

It may be understood that the task management method provided in embodiments of this application is used in the entire procedure in which the high-load task is initiated and executed in the user-mode application. When the task is ready to be initiated, classification is performed on the task, and a key urgent task may be directly executed. Before executing a non-key urgent high-load task, it is necessary to query the monitoring module for a recommendation about management and control. The monitoring module provides, based on the current stub information of the system service and system load pressure, the recommendation about task management and control, for example, delaying execution or adjusting priorities. After obtaining the recommendation about task management and control, the task decision making module makes, based on the recommendation and a current task status, a final decision, for example, direct execution, delayed execution, or priority adjustment execution.

An application scenario in which a mobile phone application is started up is used as an example to describe a task management method provided in embodiments of this application. For the mobile phone application startup scenario, GC/JIT tasks of applications on the entire mobile phone are managed and controlled, to ensure that foreground startup prioritizes the use of resources. Application startup performance is improved.

As shown in FIG. 7, a corresponding stub is inserted into a system service/system application. When application startup, which is a key scenario associated with user experience, occurs, information associated with the key scenario is written onto a specified kernel driver node in an ioctl method.

Before high-load tasks of other applications on the mobile phone are initiated, the tasks are dynamically allocated to different types of tasks based on types of current processes and task functions, and different decision making policies are applied. Then, the information associated with the key scenario is written onto a specified kernel driver node in an ioctl manner, and the monitoring module is queried for a recommendation about management and control. A current task execution decision, for example, delaying execution or adjusting the priority, is made based on the recommendation about management and control and an application status. After the current task execution is complete, the completion also needs to be written onto the driver node in the ioctl manner, to notify the monitoring module, so that the monitoring module can monitor task pressure of the entire system.

The monitoring module provides, based on information that is about the scenario and task execution and that is transferred in the user mode, a recommendation about management and control of the high-load task for the user-mode application. The management and control policy includes system load, which means obtaining storage load information, psi pressure load information, and the like. The Key scenario is in a management and control range within 2s after the application is started. Task timeout means that when a task is delayed for a long time, a timeout mechanism is used to ensure that the task is forcibly executed after timeout. The task pressure is used to manage and control the queue to ensure that a quantity of tasks is within a quantity limit, and if the quantity of tasks exceeds the limit, the high-load task is forcibly executed.

If the global status of the current system is not sensed and controlled, and if the global status needs to be sensed based on the system service in the user mode, frequent binder communication needs to be performed with an application process. Consequently, increasing communication overheads are increased and effect degrades. In embodiments of this application, an entire system monitoring module (for example, the monitoring module 121 described above) is added to the kernel mode, and information communication is performed in a manner with low overheads, for example, the system call/ioctl. In addition, some load information of the entire system in the kernel can be obtained more conveniently. User experience is ensured at lower costs.

In embodiments of this application, in the key scenario, when the high-load task is executed in the user mode, an execution solution is determined based on the recommendation provided by an entire system monitoring module (for example, the monitoring module 121 described above) of a kernel and a user-mode policy, for example, a current task status. The key scenarios include critical scenarios associated with user experience, such as application startup, fingerprint recognition, and screen-on in the system service. Status monitoring for the entire system includes current user scenario, high-load task execution information, and kernel load information of the entire system, to implement management and control of the high-load tasks of applications on the entire system. This can ensure prior occupation of resources by the key scenario, to improve user experience, for example, the application startup time.

An embodiment of this application further provides a computer storage medium. The computer storage medium stores computer instructions. When the computer instructions are run on an electronic device, the electronic device is enabled to perform the related method to implement the task management method in the foregoing embodiments.

An embodiment of this application further provides a computer program product. When the computer program product is run on a computer, the computer is enabled to perform the task management method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the task management method in the foregoing method embodiments.

The electronic device, the computer storage medium, the computer program product, or the chip provided in embodiments of this application may be configured to perform the corresponding method provided above. Therefore, for beneficial effects that can be achieved, refer to the beneficial effects of the corresponding method provided above. Details are not described herein again.

The foregoing descriptions about implementations allow a person skilled in the art to clearly understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the foregoing described apparatus embodiment is an example. For example, division into the modules or units is logical function division and may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate. A component displayed as a unit may be one or more physical units, that is, may be located in one place, or may be distributed in a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

Finally, it should be noted that the foregoing embodiments are merely intended for describing the technical solutions of this application, but not for limiting the technical solutions of this application. Although this application is described in detail with reference to the example embodiments, a person of ordinary skill in the art should understand that modifications or equivalent replacements may be made to the technical solutions of this application, without departing from the spirit and scope of the technical solutions of this application.

## Claims

1. A task management method, wherein the task management method comprises:
monitoring whether a key scenario of an electronic device is triggered;
if it is monitored that the key scenario is triggered, monitoring, in user mode, a high-load task generated by an application;
determining, in the user mode, a status of the high-load task, and transferring information associated with the high-load task to kernel mode;
monitoring, in the kernel mode, a system global status of the electronic device, determining an execution policy of the high-load task based on the information associated with the high-load task and/or the system global status, and returning the execution policy to the user mode; and
determining, in the user mode, an execution decision of the high-load task based on the status of the high-load task and/or the execution policy.

2. The task management method according to claim 1, wherein the key scenario comprises application startup, user identity identification, display interface drawing, and screen-on and screen-off of a display.

3. The task management method according to claim 1, wherein the method further comprises:
inserting a stub into a system service and/or a system application of the electronic device, wherein the stub is a code segment for collecting information;
monitoring, in the user mode by executing the stub, whether the key scenario is triggered, and when the key scenario is triggered, collecting, via the stub, information associated with the key scenario; and
writing, by the system service or the system application, the information associated with the key scenario onto a monitoring module in the kernel mode, wherein the monitoring module monitors the system global status of the electronic device based on the information associated with the key scenario.

4. The task management method according to claim 3, wherein the monitoring, in the user mode by executing the stub, whether the key scenario is triggered comprises:
detecting, by executing the stub, whether a value of a key scenario flag corresponding to a task generated by the application is a preset value; and
if the value of the key scenario flag of the task is the preset value, determining that the key scenario is triggered; or
if the value of the key scenario flag of the task is not the preset value, determining that the key scenario is not triggered.

5. The task management method according to claim 3, wherein the system service or the system application writes the information associated with the key scenario onto the monitoring module in the kernel mode by communicating with the kernel mode.

6. The task management method according to claim 1, wherein the determining, in the user mode, a status of the high-load task comprises:
performing classification on the high-load task in the user mode, to determine a type of the high-load task, and using the type of the high-load task as the status of the high-load task.

7. The task management method according to claim 6, wherein types of the high-load task comprise a key urgent task, a key non-urgent task, a non-key urgent task, and a non-key non-urgent task.

8. The task management method according to claim 7, wherein the performing classification on the high-load task in the user mode, to determine a type of the high-load task comprises:
determining whether the high-load task is generated by a foreground process, and determining whether the high-load task has expired; and
if the high-load task is generated by the foreground process and the high-load task has expired, determining that the high-load task is the key urgent task;
if the high-load task is generated by the foreground process and the high-load task has not expired, determining that the high-load task is the key non-urgent task;
if the high-load task is not generated by the foreground process and the high-load task has expired, determining that the high-load task is the non-key urgent task; or
if the high-load task is not generated by the foreground process and the high-load task has not expired, determining that the high-load task is the non-key non-urgent task.

9. The task management method according to claim 8, wherein the determining whether the high-load task has expired comprises:
determining whether current time exceeds expected processing time of the high-load task; and
if the current time exceeds the expected processing time of the high-load task, determining that the high-load task has expired; or
if the current time does not exceed the expected processing time of the high-load task, determining that the high-load task has not expired.

10. The task management method according to claim 7, wherein both the execution policy and the execution decision comprise normal execution, delayed execution, and priority adjustment execution.

11. The task management method according to claim 10, wherein the determining, in the user mode, a status of the high-load task, and transferring information associated with the high-load task to kernel mode comprises:
if it is determined in the user mode that the high-load task is the key urgent task, determining that the execution decision of the high-load task is the normal execution; or
if it is determined in the user mode that the high-load task is not the key urgent task, transferring the information associated with the high-load task to the kernel mode.

12. The task management method according to claim 10, wherein the system global status comprises system load, duration of the key scenario, delay time of the high-load task, and a quantity of high-load tasks for the priority adjustment execution.

13. The task management method according to claim 12, wherein the information associated with the high-load task comprises the status of the high-load task, and a package name, a version number, and a task name of the application that generates the high-load task.

14. The task management method according to claim 13, wherein the determining an execution policy of the high-load task based on the information associated with the high-load task and/or the system global status comprises:
determining, by a monitoring module, whether the system load is greater than or equal to a first threshold; and
if the system load is greater than or equal to the first threshold, determining that execution policies of the key non-urgent task and the non-key urgent task are the delayed execution, and determining that the execution policy of the non-key non-urgent task is the priority adjustment execution; or
if the system load is less than the first threshold, determining that execution policies of the key non-urgent task and the non-key urgent task are the normal execution, and determining that the execution policy of the non-key non-urgent task is the delayed execution.

15. The task management method according to claim 13, wherein the determining an execution policy of the high-load task based on the information associated with the high-load task and/or the system global status comprises:
determining, by a monitoring module, whether the system load is greater than or equal to a first threshold, and determining whether the duration of the key scenario is less than or equal to a second threshold; and
if the system load is greater than or equal to the first threshold and the duration of the key scenario is less than or equal to the second threshold, determining that execution policies of the key non-urgent task and the non-key urgent task are the delayed execution, and determining that the execution policy of the non-key non-urgent task is the priority adjustment execution; or
if the system load is less than the first threshold or whether the duration of the key scenario is greater than the second threshold, determining that execution policies of the key non-urgent task and the non-key urgent task are the normal execution, and determining that the execution policy of the non-key non-urgent task is the delayed execution.

16. The task management method according to claim 12, wherein the method further comprises:
monitoring timeout of the high-load task for the delayed execution, and monitoring the quantity of the high-load tasks for the priority adjustment execution.

17. The task management method according to claim 16, wherein the monitoring timeout of the task for the delayed execution comprises:
detecting in real time whether the delay time of the high-load task for the delayed execution is greater than or equal to a third threshold; and
if the delay time of the high-load task for the delayed execution is greater than or equal to the third threshold, updating the execution policy of the task for the delayed execution to the normal execution.

18. The task management method according to claim 17, wherein the monitoring the quantity of the high-load tasks for the priority adjustment execution comprises:
detecting in real time whether the quantity of the high-load tasks in a queue of tasks to be executed is greater than or equal to a fourth threshold; and
if the quantity of the high-load tasks in the queue of the tasks is greater than or equal to the fourth threshold, updating an execution policy of at least one high-load task in the queue of the tasks to the normal execution.

19. The task management method according to any one of claims 1 to 18, wherein the method further comprises:
determining, in the user mode, the execution decision of the high-load task based on the status of the high-load task, the execution policy, and a function of the high-load task.

20. The task management method according to any one of claims 1 to 18, wherein the method further comprises:
sending, in the user mode, an execution status of the high-load task to the kernel mode, wherein the execution status comprises request information, start information, and end information of execution of the high-load task.

21. The task management method according to any one of claims 1 to 18, wherein the monitoring, in user mode, a high-load task generated by an application comprises:
when the application generates a task, determining whether the task is the high-load task.

22. The task management method according to claim 21, wherein the determining whether the task is the high-load task comprises:
obtaining, in the user mode, information associated with the task, and sending the information associated with the task to the monitoring module;
querying, by the monitoring module, historical load information of the task, and returning, to the user mode, the historical load information that is of the task and that is obtained through query;
determining, in the user mode, whether the historical load information of the task is greater than or equal to a load threshold; and
if the historical load information of the task is greater than or equal to the load threshold, determining that the task is the high-load task; or
if the historical load information of the task is less than the load threshold, determining that the task is not the high-load task.

23. A computer-readable storage medium, comprising computer instructions, wherein when the computer instructions are run on an electronic device, the electronic device is enabled to perform the task management method according to any one of claims 1 to 22.

24. An electronic device, wherein the electronic device comprises a processor and a memory, the memory is configured to store instructions, and the processor is configured to invoke the instructions in the memory, to enable the electronic device to perform the task management method according to any one of claims 1 to 22.

25. A chip, coupled to a memory in an electronic device, wherein the chip is configured to control the electronic device to perform the task management method according to any one of claims 1 to 22.
